# EUROPEAN PATENT APPLICATION

(11) **EP 4 716 047 A1**
(43) Date of publication of application: **25.03.2026**
(21) Application number: 25192997.2
(22) Date of filing: 31.07.2025
(51) Int. Cl.: H02J 3/00, H02J 1/14, B60L 53/14, B60L 55/00, B60L 53/68, B60L 53/67, B60L 53/63, H02J 1/00, B60L 53/30, B60L 53/53, B60L 53/66, B60L 53/62

(54) **CONTROL APPARATUS, ELECTRIC POWER SYSTEM, CONTROL METHOD, AND PROGRAM**

(30) Priority: 24.09.2024 JP 2024165571
(71) Applicant: HONDA MOTOR CO., LTD., Tokyo 105-8404 (JP)
(72) Inventor: HONDA, Kazumasa, Saitama, 3510193 (JP); ISHIZUKA, Asaki, Tokyo, 1058404 (JP); SHIGEOKA, Shin, Tokyo, 1058404 (JP)
(74) Representative: Weickmann & Weickmann PartmbB

(57) **Abstract**

A control apparatus includes a decision unit which decides a discharge instruction amount indicating electric power that each of discharge apparatuses which release electric power to each of a plurality of circuits is caused to discharge, and a determination unit which determines whether or not the discharge instruction amount is to be changed based on the discharge instruction amount and an actual value of the electric power released from the discharge apparatus to each of the plurality of circuits. A control method includes deciding a discharge instruction amount indicating electric power that each of discharge apparatuses which release electric power to each of a plurality of circuits is caused to discharge, and determining whether or not the discharge instruction amount is to be changed based on the discharge instruction amount and an actual value of the electric power released from the discharge apparatus to each of the plurality of circuits.

## Description

### BACKGROUND

### 1. TECHNICAL FIELD

The present invention relates to a system, a program, a control method, and a storage medium.

### 2. RELATED ART

Patent document 1 discloses a technique related to charge management for an electrically-driven vehicle.

### RELATED ART DOCUMENTS

### Patent document

Patent Document 1: Japanese Translation Publication of a PCT Route Patent Application No. 2014-519300.

It is desired that a discharge instruction amount for instructing electric power to be provided to a circuit is appropriately decided.

### SUMMARY

According to a first aspect of the present invention, there is provided a control apparatus.

The control apparatus includes a decision unit which decides a discharge instruction amount indicating electric power that each of discharge apparatuses which release electric power to each of a plurality of circuits is caused to discharge. The control apparatus includes a determination unit which determines whether or not the discharge instruction amount is to be changed based on the discharge instruction amount and an actual value of the electric power released from the discharge apparatus to each of the plurality of circuits.

The above-described control apparatus may include a reception unit which receives a discharge request indicating discharging power that is to be released to the plurality of circuits. The decision unit may decide the discharge instruction amount based on the discharge request.

Any of the above-described control apparatuses may further include a storage unit which stores information indicating at least one of the discharge instruction amount to the discharge apparatus in past or the actual value of the electric power released to each of the plurality of circuits from the discharge apparatus in past. The decision unit may decide the discharge instruction amount based on the information stored in the storage unit.

**In** any of the above-described control apparatuses, each of the plurality of circuits may include an electric power load apparatus which generates an electric power load by consuming electric power or accumulating electric power. The control apparatus may further include
a prediction unit which generates, based on the information stored in the storage unit, (i) a predicted value in future of load power of each of the electric power load apparatuses respectively included in the plurality of circuits or (ii) a predicted value in future of a total amount of the load power of each of the electric power load apparatuses respectively included in the plurality of circuits. The decision unit may decide the discharge instruction amount based on the predicted value generated by the prediction unit.

Any of the above-described control apparatuses may further include a storage unit which stores information indicating at least one of the discharge instruction amount to the discharge apparatus in past or the actual value of the electric power released to each of the plurality of circuits from the discharge apparatus in past. The control apparatus may further include a prediction unit which generates a predicted value in future of electric power which may be released to the plurality of circuits based on the information stored in the storage unit. The control apparatus may further include a selection unit which selects, based on the predicted value generated by the prediction unit, one or more discharge apparatuses to which a movable body including an energy accumulation apparatus is to be connected among the discharge apparatuses.

According to a second aspect of the present invention, a control apparatus is provided. The control apparatus includes a decision unit which decides a discharge instruction amount indicating electric power that each of discharge apparatuses which release electric power to each of a plurality of circuits is caused to discharge. The control apparatus includes a storage unit which stores information indicating at least one of the discharge instruction amount to the discharge apparatus in past or the actual value of the electric power released to each of the plurality of circuits from the discharge apparatus in past. The control apparatus includes a prediction unit which generates a predicted value in future of electric power which may be released to the plurality of circuits based on the information stored in the storage unit. The control apparatus includes a selection unit which selects, based on the predicted value generated by the prediction unit, one or more discharge apparatuses to which a movable body including an energy accumulation apparatus is to be connected among the discharge apparatuses.

According to a third aspect of the present invention, an electric power system is provided. The electric power system includes any of the above-described control apparatuses. The electric power system includes the plurality of circuits. The electric power system includes the discharge apparatus. Each of the plurality of circuits has an electric power load apparatus which generates an electric power load by consuming electric power or accumulating electric power. The discharge apparatus which releases electric power to each circuit of the plurality of circuits releases electric power to the electric power load apparatus included in each circuit.

**In** the above-described electric power system, each of the plurality of circuits may include an electric power load apparatus which generates an electric power load by consuming electric power or accumulating electric power. The electric power load apparatus included in each of the plurality of circuits and the discharge apparatus which releases electric power to each circuit may be configured as a same electric circuit.

In any of the above-described electric power systems, the discharge apparatus may be a discharge device or a charge and discharge device which is connectable to a movable body including an energy accumulation apparatus.

According to a fourth aspect of the present invention, there is provided a control method. The control method includes deciding a discharge instruction amount indicating electric power that each of discharge apparatuses which release electric power to each of a plurality of circuits is caused to discharge. The control method includes determining whether or not the discharge instruction amount is to be changed based on the discharge instruction amount and an actual value of the electric power released from the discharge apparatus to each of the plurality of circuits.

According to a fifth aspect of the present invention, there is provided a control method. The control method includes deciding a discharge instruction amount indicating electric power that each of discharge apparatuses which release electric power to each of a plurality of circuits is caused to discharge. The control method includes storing information indicating at least one of the discharge instruction amount to the discharge apparatus in past or the actual value of the electric power released to each of the plurality of circuits from the discharge apparatus in past. The control method includes generating a predicted value in future of electric power which may be released to the plurality of circuits based on the information stored in the storing. The control method includes selecting, based on the predicted value generated in the generating the predicted value, one or more discharge apparatuses to which a movable body including an energy accumulation apparatus is to be connected among the discharge apparatuses.

According to a sixth aspect of the present invention, there is provided a program. The program causes, when executed by a computer, the computer to function as any of the above-described control apparatuses.

The summary clause of the invention described above does not describe all necessary features of the present invention. The present invention may also be a sub-combination of the features described above.

### BRIEF DESCRIPTION OF THE DRAWINGS

Fig. 1 conceptually illustrates a utilization form of a system 5 in an embodiment.
Fig. 2 schematically illustrates an electric power system 19 in a business establishment 30.
Fig. 3 illustrates an example of a system configuration of an electric power control apparatus 40.
Fig. 4 illustrates an example of a system configuration of a vehicle management apparatus 60.
Fig. 5 illustrates an example of a system configuration of an integrated management apparatus 50.
Fig. 6 illustrates an example of a system configuration of a control apparatus 100.
Fig. 7 illustrates an execution sequence of processing in a method performed by an electric power control apparatus 40, the integrated management apparatus 50, and the vehicle management apparatus 60.
Fig. 8 is a diagram for describing control by the control apparatus 100.
Fig. 9 illustrates a state in which the control apparatus 100 has changed a discharge instruction amount.
Fig. 10 is a flowchart related to processing performed in the control apparatus 100.
Fig. 11 illustrates a flowchart related to processing for a decision unit 104 to decide the discharge instruction amount.
Fig. 12 illustrates a flowchart related to processing of selecting a charge and discharge device 13 to which a vehicle 10 is to be connected.
Fig. 13 illustrates an example of a computer 2000.

### DESCRIPTION OF EXEMPLARY EMBODIMENTS

The present invention will be described below through embodiments of the invention, but the following embodiments do not limit the invention according to the claims. In addition, not all combinations of features described in the embodiments are essential to a solution of the invention.

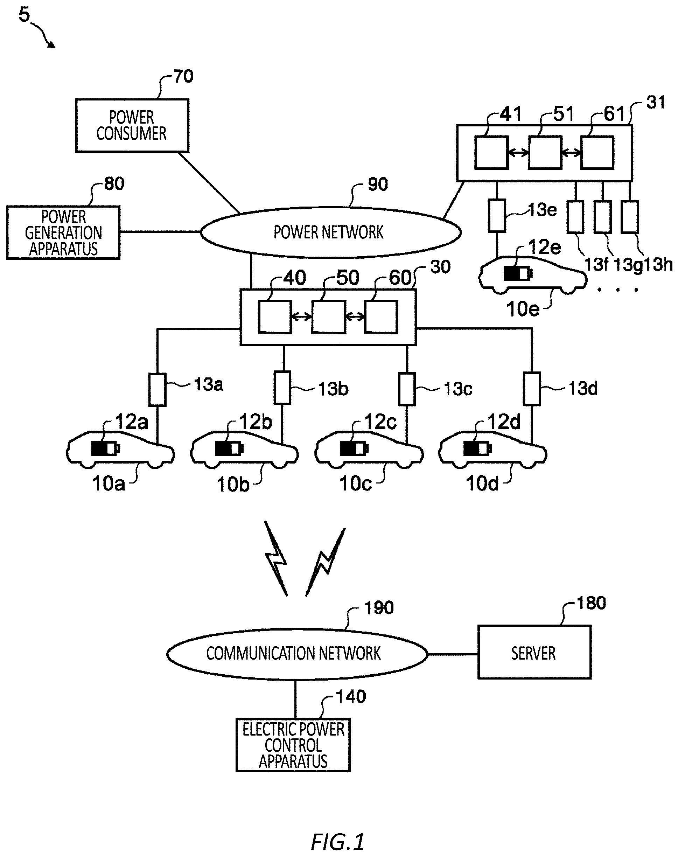

Fig. 1 conceptually illustrates a utilization form of a system 5 in an embodiment. The system 5 includes a power generation apparatus 80, a plurality of vehicles including a vehicle 10a, a vehicle 10b, a vehicle 10c, a vehicle 10d, and a vehicle 10e, a plurality of charge and discharge devices 13 including a charge and discharge device 13a, a charge and discharge device 13b, a charge and discharge device 13c, a charge and discharge device 13d, a charge and discharge device 13e, a charge and discharge device 13f, a charge and discharge device 13g, and a charge and discharge device 13h, an electric power control apparatus 40 and an electric power control apparatus 41, an integrated management apparatus 50 and an integrated management apparatus 51, a vehicle management apparatus 60 and a vehicle management apparatus 61, an electric power control apparatus 140, and a server 180.

A power consumer 70 and the power generation apparatus 80 are connected to a power network 90. The electric power generated by the power generation apparatus 80 can be supplied to the power consumer 70 through the power network 90. The power network 90 is an electric power system, for example.

The vehicle 10a, the vehicle 10b, the vehicle 10c, the vehicle 10d, and the vehicle 10e are electric vehicles including a battery 12a, a battery 12b, a battery 12c, a battery 12d, and a battery 12e which accumulate driving electric power for vehicle travel, respectively. The electric vehicle is an example of an electrically-driven vehicle. The electric vehicle is an example of a movable body. In the present embodiment, in particular, the vehicle 10a, the vehicle 10b, the vehicle 10c, and the vehicle 10d may be collectively referred to as a "vehicle 10", and the battery 12a, the battery 12b, the battery 12c, and the battery 12d may be collectively referred to as a "battery 12". The battery 12 is an example of an energy accumulation apparatus. The charge and discharge device 13a, the charge and discharge device 13b, the charge and discharge device 13c, the charge and discharge device 13d and the charge and discharge device 13e, the charge and discharge device 13f, the charge and discharge device 13g, and the charge and discharge device 13h may be collectively referred to as a "charge and discharge device 13". The charge and discharge device 13 is an example of a discharge apparatus connectable to the vehicle 10. The discharge apparatus may be a charge and discharge device or may be a discharge device.

The vehicle 10 is deployed in a business establishment 30. The business establishment 30 functions as a home point for parking the vehicle 10. In the present embodiment, the business establishment 30 may be referred to as a "headquarter". The vehicle 10 may be, for example, a vehicle for commercial use or may be a vehicle for carrying shipments such as products handled by the business establishment 30. Electric power is supplied to the business establishment 30 through the power network 90. In the present embodiment, control in the business establishment 30 will be described, but the control described in the present embodiment is not limited to the business establishment 30 and can be adopted as control in residences such as private homes and apartment complexes.

The electric power control apparatus 40, the integrated management apparatus 50, and the vehicle management apparatus 60 are provided in the business establishment 30. The vehicle 10 is provided to be able to communicate with the vehicle management apparatus 60 through a mobile communication network or the like. The business establishment 30 has a local power network in the business establishment and can perform electric power transfer with the battery 12 included in the vehicle 10 through the charge and discharge device 13 provided in the business establishment 30. That is, the vehicle 10 can be used for energy management in the business establishment 30. The battery 12 included in the vehicle 10 can perform the electric power transfer with the power network 90 through a power network in the business establishment 30. The electric power control apparatus 40 controls charging and discharging of the vehicle 10 deployed in the business establishment 30 so as to at least satisfy a power demand in the business establishment 30.

The electric power control apparatus 40, the integrated management apparatus 50, and the vehicle management apparatus 60 are managed, for example, in the business establishment 30. The electric power control apparatus 40 and the integrated management apparatus 50 are provided to be able to communicate with each other through a communication line. The integrated management apparatus 50, the electric power control apparatus 40, and the vehicle management apparatus 60 are provided to be able to communicate with each other through a communication line. The integrated management apparatus 50, the electric power control apparatus 40, and the vehicle management apparatus 60 may be provided outside the business establishment 30. The integrated management apparatus 50, the electric power control apparatus 40, and the vehicle management apparatus 60 may be provided to be able to communicate with each other through a communication line such as the Internet. At least any of the electric power control apparatus 40, the integrated management apparatus 50, or the vehicle management apparatus 60 may be embodied as a server such as a cloud server.

The vehicle management apparatus 60 decides a time of day at which the vehicle 10 departs from the business establishment 30 and a time of day at which the vehicle 10 returns to the business establishment. The integrated management apparatus 50 performs an arbitration to adjust a time of day at which the vehicle 10 departs from the business establishment 30 and a time of day at which the vehicle 10 returns to the business establishment 30 to meet a power demand in the business establishment 30. For example, the integrated management apparatus 50 performs the arbitration to adjust the time of day at which the vehicle 10 departs from the business establishment 30 and the time of day at which the vehicle 10 returns to the business establishment 30 so that peak shave of the power demand in the business establishment 30 can be performed. The vehicle management apparatus 60 manages the vehicle 10 based on the schedule of the vehicle 10 adjusted by the integrated management apparatus 50. The electric power control apparatus 40 controls charging and discharging of the battery 12 included in the vehicle 10 based on the schedule of the vehicle 10 adjusted by the integrated management apparatus 50.

The vehicle 10e is deployed in a business establishment 31. The business establishment 31 functions as a home point for parking the vehicle 10e. Similarly as in the vehicle 10, the vehicle 10e may be a vehicle for commercial use or may be a vehicle for carrying shipments such as products handled by the business establishment 30. Electric power is supplied to the business establishment 31 through the power network 90. The electric power control apparatus 41, the integrated management apparatus 51, and the vehicle management apparatus 61 are provided in the business establishment 31.

**In** the business establishment 31, the electric power control apparatus 41, the integrated management apparatus 51, and the vehicle management apparatus 61 correspond to the electric power control apparatus 40, the integrated management apparatus 50, and the vehicle management apparatus 60. The electric power control apparatus 41, the integrated management apparatus 51, and the vehicle management apparatus 61 perform control similar to that of the electric power control apparatus 40, the integrated management apparatus 50, and the vehicle management apparatus 60 except that a control target and/or a management target are the business establishment 31 and/or the vehicle 10e. For this reason, description of the control related to the electric power control apparatus 41, the integrated management apparatus 51, the vehicle management apparatus 61, and the vehicle 10 is omitted.

The electric power control apparatus 140 communicates with the electric power control apparatus 40 and the electric power control apparatus 41 through a communication network 190, and supervises overall electric power control in the business establishment 30 and the business establishment 31. For example, the electric power control apparatus 140 collects information related to power supply and demand from the electric power control apparatus 40 and the electric power control apparatus 41, and adjusts overall power supply and demand including electric power transaction with the power network 90, so that the electric power control apparatus 40 and the electric power control apparatus 41 are caused to perform control so as to minimize the total power cost of the business establishment 30 and the business establishment 31.

The electric power control apparatus 140 is connected to the server 180 through the communication network 190. The server 180 is, for example, a server used by an electric power aggregator. The server 180 conducts electric power transaction in an electricity market. The electric power control apparatus 140 can provide the server 180 with electric power resources which are held by aggregating the vehicles deployed in the business establishment 30 and the business establishment 30. The electric power control apparatuses 40 and 41 control charge and discharge of the battery of each of the vehicles deployed in the business establishment 30 and the business establishment 31, and the electric power control apparatus 140 provides electric power agreed by the server 180. For example, according to the demand from the server 180, the electric power control apparatus 140 controls the electric power control apparatus 40 and charging and discharging of the battery 12 controlled by the electric power control apparatus 40, and provides electric power corresponding to the demand.

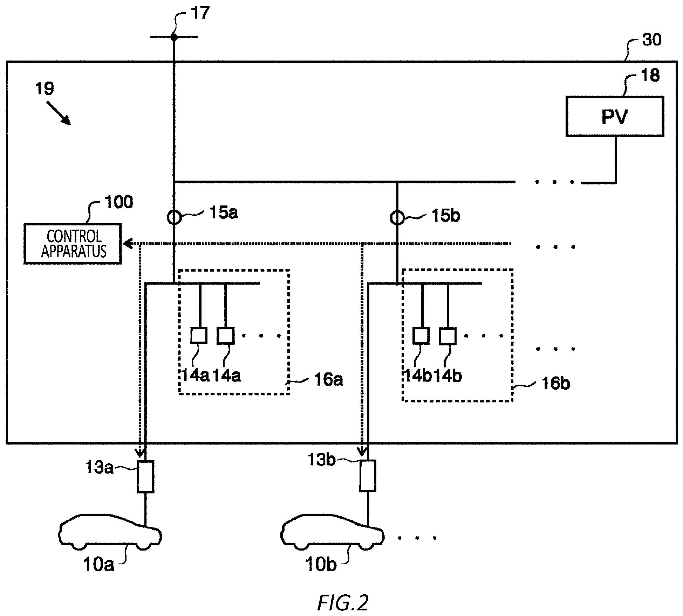

Fig. 2 schematically illustrates an electric power system 19 in the business establishment 30. The electric power system 19 configures a part of the system 5. The electric power system 19 includes a control apparatus 100, a plurality of charge and discharge devices 13 including the charge and discharge device 13a and the charge and discharge device 13b, a plurality of circuits including a circuit 16a and a circuit 16b, a plurality of current transformers including a current transformer 15a and a current transformer 15b, and a solar photovoltaic apparatus 18.

In the present embodiment, the plurality of current transformers including the current transformer 15a and the current transformer 15b may be collectively referred to as a current transformer 15. The plurality of circuits including the circuit 16a and the circuit 16b may be collectively referred to as a circuit 16.

The circuit 16a includes a plurality of electric power load apparatuses 14a. The circuit 16b has a plurality of electric power load apparatuses 14b. In this manner, each of the plurality of circuits 16 has a plurality of electric power load apparatuses. The plurality of electric power load apparatuses included in each of the plurality of circuits 16 may be collectively referred to as an electric power load apparatus 14. When the electric power load apparatus 14 consumes electric power or accumulates electric power, an electric power load in the circuit 16 is generated. The electric power load apparatus 14 can include an energy storage apparatus.

The reception power point 17 is a reception power point of grid power in the business establishment 30. The charge and discharge device 13a can charge the battery 12 included in the vehicle 10 connected to the charge and discharge device 13a with electric power supplied through the reception power point 17 and the current transformer 15a. The charge and discharge device 13a releases, to the circuit 16a, electric power generated through discharge of the battery 12 included in the vehicle 10 connected to the charge and discharge device 13a. The electric power load apparatus 14a consumes or accumulates the electric power supplied through the reception power point 17 and the current transformer 15a and also consumes or accumulates the electric power released to the circuit 16a by the charge and discharge device 13a.

The electric power load apparatus 14b and the current transformer 15b which are connected to the charge and discharge device 13b respectively have functions similar to those of the electric power load apparatus 14a and the current transformer 15a. In Fig. 2, it is noted that the electric power load apparatuses 14 and the current transformers 15 which are connected to the other electric power charge and discharge device 13c and charge and discharge device 13d are omitted.

In this manner, the charge and discharge device 13 which releases the electric power to each circuit 16 of the plurality of circuits 16 releases the electric power to the electric power load apparatus 14 included in each of the circuits 16. The electric power load apparatus 14 included in each of the plurality of circuits 16 and the charge and discharge device 13 which releases the electric power to each of the circuits 16 are configured as a same electric circuit 16.

Electric power generated by the solar photovoltaic apparatus 18 may be supplied to each of the electric power load apparatuses 14 through the current transformer 15.

The control apparatus 100 is, for example, an energy management system. The control apparatus 100 is, for example, a building energy management system. The control apparatus 100 controls charge and discharge of the battery 12 included in the vehicle 10 connected to the charge and discharge device 13 by controlling the charge and discharge device 13.

The control apparatus 100 controls charge and discharge of the battery 12 included in the vehicle 10 based on at least one instruction of the electric power control apparatus 40 or the server 180. For example, the control apparatus 100 discharges the battery 12 included in the vehicle 10 based on a discharge request from the electric power control apparatus 40 and releases the generated electric power to the circuit 16.

The charge and discharge device 13 detects the electric power supplied to the vehicle 10 through the charge and discharge device 13 and outputs the supplied electric power to the control apparatus 100. The charge and discharge device 13 detects the electric power released from the vehicle 10 through the charge and discharge device 13 to the circuit 16 and outputs the supplied electric power to the control apparatus 100. The control apparatus 100 stores an actual value of the electric power supplied to the vehicle 10 through the charge and discharge device 13 and an actual value of the electric power released to the circuit 16. The control apparatus 100 performs the control related to the discharge of the battery 12 based on at least the actual value of the electric power released to the circuit 16 through the charge and discharge device 13.

The control mainly related to the business establishment 30 will be described with reference to Fig. 2 to Fig. 12 or the like. Specifically, control related to the electric power control apparatus 40, the integrated management apparatus 50, the vehicle management apparatus 60, and the vehicle 10 is described. However, the control related to the business establishment 30 can be applied to the control related to the business establishment 31.

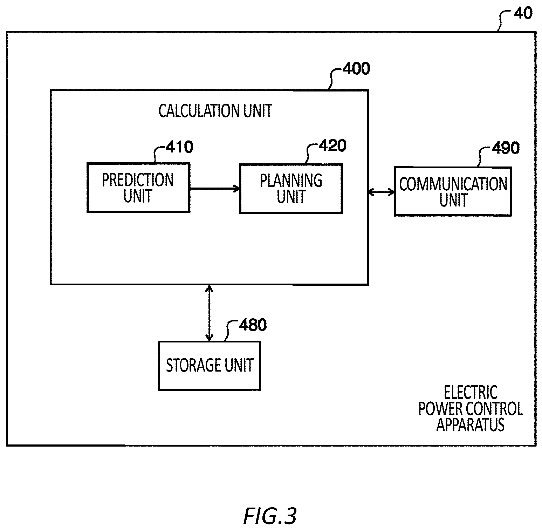

Fig. 3 illustrates an example of a system configuration of the electric power control apparatus 40. The electric power control apparatus 40 includes a calculation unit 400, a storage unit 480, and a communication unit 490.

The calculation unit 400 performs control of the communication unit 490. The communication unit 490 is responsible for communication with the integrated management apparatus 50 or the like. The calculation unit 400 is embodied as a computing apparatus including a processor. Each storage unit 480 is embodied including a non-volatile storage medium. The calculation unit 400 performs processing by using the information stored in the storage unit 480. The calculation unit 400 may be embodied as a microcomputer including a CPU, a ROM, a RAM, an I/O, a bus, and the like. The electric power control apparatus 40 may be embodied as a computer.

**In** the present embodiment, the electric power control apparatus 40 is embodied as a single computer. However, in another embodiment, the electric power control apparatus 40 may be embodied as a plurality of computers. At least some of the functions of the electric power control apparatus 40 may be achieved by one or more servers such as a cloud server.

The calculation unit 400 includes a prediction unit 410 and a planning unit 420. The prediction unit 410 predicts a power demand in the business establishment 30. For example, the prediction unit 410 predicts the power demand in the business establishment 30 based on a history of a past power demand in the business establishment 30 which is stored in the storage unit 480. Specifically, the prediction unit 410 may predict an amount of electric power consumed in the business establishment 30 every predetermined unit period (for example, every 30 minutes) in a day.

The planning unit 420 generates power plan information in the business establishment 30 based on the power demand predicted by the prediction unit 410. For example, the planning unit 420 generates, based on the power demand predicted by the prediction unit 410, the power plan information indicating electric power that is to be released from the battery 12 to the circuit 16 provided in the business establishment 30 and a period in which the electric power is to be released to the circuit 16 and/or electric power that is to be supplied from the power network 90 to the battery 12 and a period in which the electric power is to be supplied to the battery 12. As an example, when it is predicted that an amount of electric power consumed in the business establishment 30 exceeds a predetermined amount of electric power, the planning unit 420 generates power plan information to release the electric power from the battery 12 to the circuit 16 provided in the business establishment 30 so that the amount of electric power supplied from the power network 90 to the business establishment 30 does not exceed the predetermined amount of electric power. The communication unit 490 transmits the power plan information generated by the planning unit 420 to the integrated management apparatus 50.

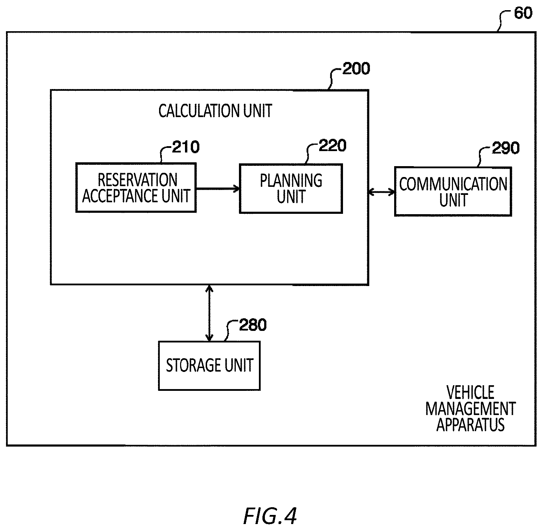

Fig. 4 illustrates an example of a system configuration of the vehicle management apparatus 60. The vehicle management apparatus 60 includes a calculation unit 200, a storage unit 280, and a communication unit 290.

The calculation unit 200 performs control of the communication unit 290. The communication unit 290 is responsible for communication between the vehicle 10 and the integrated management apparatus 50 or the like. The calculation unit 200 is embodied as a computing apparatus including a processor. Each storage unit 280 is embodied including a non-volatile storage medium. The calculation unit 200 performs processing by using the information stored in the storage unit 280. The calculation unit 200 may be embodied as a microcomputer including a CPU, a ROM, a RAM, an I/O, a bus, and the like. The vehicle management apparatus 60 may be embodied as a computer.

**In** the present embodiment, the vehicle management apparatus 60 shall be embodied as a single computer. However, in another embodiment, the vehicle management apparatus 60 may be embodied as a plurality of computers. At least some of the functions of the vehicle management apparatus 60 may be achieved by one or more servers such as a cloud server.

The calculation unit 200 includes a reservation acceptance unit 210 and a planning unit 220. The reservation acceptance unit 210 accepts reservation information for reserving the vehicle 10. The storage unit 280 stores the reservation information. The reservation information includes selection information for a user to select the vehicle 10 to be used among the plurality of vehicles 10.

The planning unit 220 prepares a use plan of the vehicle 10 based on the information stored in the storage unit 280. For example, the planning unit 220 prepares an operation plan indicating which user is let to use the vehicle 10 based on the selection information stored in the storage unit 280.

The communication unit 290 transmits the operation plan to the integrated management apparatus 50. The communication unit 290 may further transmit at least a part of the reservation information to the integrated management apparatus 50. When the vehicle 10 to be used by the user is changed through an arbitration of conflicting reservations, the communication unit 290 may transmit a notification indicating that the vehicle 10 is changed to the user who has the reservation of the vehicle 10 that has been changed.

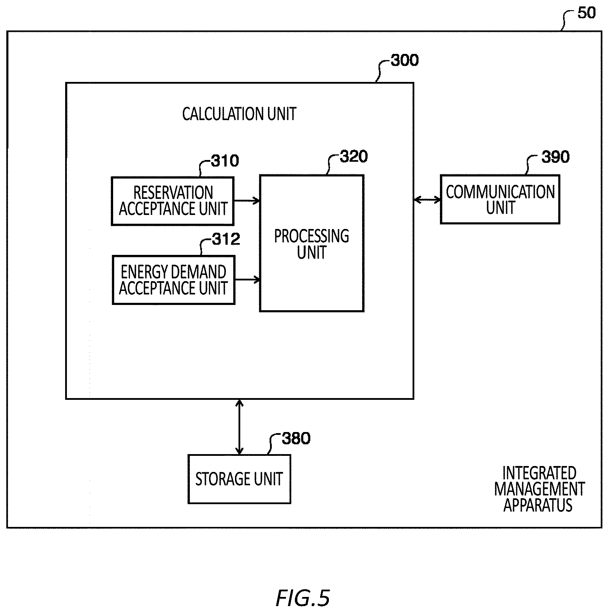

Fig. 5 illustrates an example of a system configuration of the integrated management apparatus 50. The integrated management apparatus 50 includes a calculation unit 300, a storage unit 380, and a communication unit 390.

The calculation unit 300 performs control of the communication unit 390. The communication unit 390 is responsible for communication in the integrated management apparatus 50. The communication unit 390 is responsible for communication between at least the electric power control apparatus 140, the vehicle management apparatus 60, and the electric power control apparatus 40 and the integrated management apparatus 50. The calculation unit 300 is embodied as a computing apparatus including a processor. Each storage unit 380 is embodied including a non-volatile storage medium. The calculation unit 300 performs processing by using the information stored in the storage unit 380. The calculation unit 300 may be embodied as a microcomputer including a CPU, a ROM, a RAM, an I/O, a bus, and the like. The integrated management apparatus 50 may be embodied as a computer.

**In** the present embodiment, the integrated management apparatus 50 shall be embodied including a single computer. However, in another embodiment, the integrated management apparatus 50 may be achieved by a plurality of computers. At least some of the functions of the integrated management apparatus 50 may be embodied including one or more servers such as a cloud server. In the present embodiment, the integrated management apparatus 50 and the vehicle management apparatus 60 may be embodied as a same computer or may be embodied as computers different from each other. All or at least some of functions of the integrated management apparatus 50 and the vehicle management apparatus 60 may be achieved by the same computer.

The calculation unit 300 includes a reservation acceptance unit 310, a processing unit 320, and an energy demand acceptance unit 312.

The reservation acceptance unit 310 accepts reservation information for reserving the vehicle 10. The reservation acceptance unit 310 may accept the reservation information by acquiring the reservation information input to the vehicle management apparatus 60 through the vehicle management apparatus 60 and the communication unit 390. The storage unit 380 stores reservation information. The reservation information is an example of operation plan information of the vehicle 10.

The energy demand acceptance unit 312 acquires energy demand information related to a demand of energy from the electric power control apparatus 40. For example, the energy demand acceptance unit 312 acquires, from the electric power control apparatus 40, the power plan information indicating the electric power that is to be released from the battery 12 to the circuit 16 provided in the business establishment 30 and the period in which the electric power is to be released to the circuit 16 and/or the electric power that is to be supplied from the electric power system to the battery 12 and the period in which the electric power is to be supplied to the battery 12.

The processing unit 320 modifies, based on the reservation information of the vehicle 10 and the energy demand information, the operation plan of the vehicle 10 and the power plan indicating the electric power subjected to the charge and discharge from the battery 12 of the vehicle 10 and the period such that the power plan acquired from the electric power control apparatus 40 is met as much as possible while the reservation information of the vehicle 10 which is acquired from the vehicle management apparatus 60 is met as much as possible. Accordingly, the processing unit 320 arbitrates a conflict between the reservation information and the energy demand based on the reservation information of the vehicle 10 and the energy demand information.

When the reserved vehicle 10 is changed by arbitrating the conflict by the processing unit 320, the communication unit 390 may transmit a notification indicating that the reserved vehicle 10 is changed to a user who has the changed reservation. The communication unit 390 may transmit the notification indicating that the vehicle 10 is changed through the vehicle management apparatus 60.

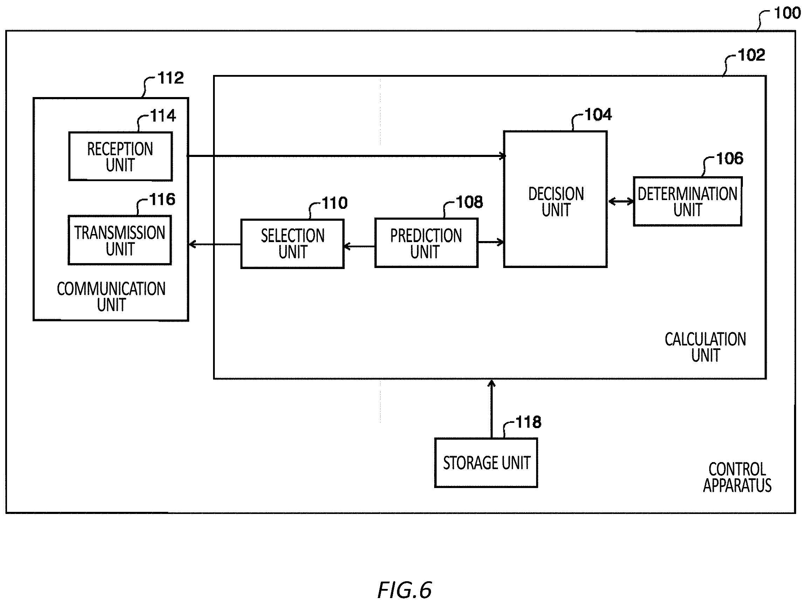

Fig. 6 illustrates an example of a system configuration of the control apparatus 100. The control apparatus 100 includes a calculation unit 102, a storage unit 118, and a communication unit 112.

The calculation unit 102 performs control of the communication unit 112. The communication unit 112 is responsible for communication in the control apparatus 100. The communication unit 112 is responsible for communication with at least the electric power control apparatus 40. The calculation unit 102 is embodied as a computing apparatus including a processor. Each storage unit 118 is embodied including a non-volatile storage medium. The calculation unit 102 performs processing by using the information stored in the storage unit 118. The calculation unit 102 may be embodied as a microcomputer including a CPU, a ROM, a RAM, an I/O, a bus, and the like. The control apparatus 100 may be embodied as a computer.

In the present embodiment, it is assumed that the control apparatus 100 is embodied including a single computer. However, in another embodiment, the control apparatus 100 may be embodied as a plurality of computers. At least some of functions of the control apparatus 100 may be achieved by including one or more servers such as a cloud server.

The calculation unit 102 includes a decision unit 104, a determination unit 106, a prediction unit 108, and a selection unit 110. The communication unit 112 includes a reception unit 114 and a transmission unit 116.

The decision unit 104 decides a discharge instruction amount indicating electric power that each of the charge and discharge devices 13 which release electric power to each of the plurality of circuits 16 is caused to discharge. The determination unit 106 determines whether or not the discharge instruction amount is to be changed based on the discharge instruction amount and the actual value of the electric power released from the charge and discharge device 13 to each of the plurality of circuits 16.

The reception unit 114 receives a discharge request indicating discharging power that is to be released to the plurality of circuits 16. For example, the reception unit 114 receives the discharge request based on the power plan and demand from the electric power control apparatus 40. The decision unit 104 decides the discharge instruction amount based on the discharge request.

The storage unit 118 stores information indicating at least one of the discharge instruction amount to the charge and discharge device 13 in the past or the actual value of the electric power released from the charge and discharge device 13 to each of the plurality of circuits 16 in the past. The decision unit 104 decides the discharge instruction amount based on the information stored in the storage unit 118.

Each of the plurality of circuits 16 has the electric power load apparatus 14 which generates the electric power load by consuming the electric power or accumulating the electric power. The prediction unit 108 generates, based on the information stored in the storage unit 118, (i) a predicted value in future of load power of each of the electric power load apparatuses 14 respectively included in the plurality of circuits 16 or (ii) a predicted value in the future of a total amount of load power of each of the electric power load apparatuses 14 respectively included in the plurality of circuits 16. The decision unit 104 decides the discharge instruction amount based on the predicted value generated by the prediction unit 108.

The storage unit 118 stores the information indicating at least one of the discharge instruction amount to the charge and discharge device 13 in the past or the actual value of the electric power released from the charge and discharge device 13 to each of the plurality of circuits 16 in the past. The prediction unit 108 generates a predicted value in the future of electric power which may be released to the plurality of circuits 16 based on the information stored in the storage unit 118. The selection unit 110 selects one or more charge and discharge devices 13 to which the vehicle 10 including the battery 12 is to be connected among the charge and discharge devices 13 based on the predicted value generated by the prediction unit 108.

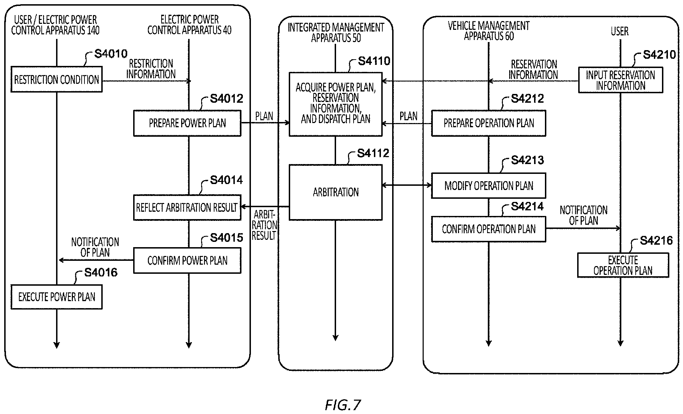

Fig. 7 illustrates an execution sequence of processing in a method performed by the electric power control apparatus 40, the integrated management apparatus 50, and the vehicle management apparatus 60. The processing in Fig. 7 represents processing from preparation of a power plan and an operation plan on a particular date until various types of control are performed according to the prepared plans. The preparation of the power plan and the operation plan is performed on a day before the target particular date or at a relatively early time on the particular date. For example, the processing of Fig. 7 may be started at 0:00 on the particular date.

As the control related to the electric power control apparatus 40, in S4010, at least one of the user of the electric power control apparatus 40 or the electric power control apparatus 140 sets a restriction condition related to the power plan in the business establishment 30 and notifies the electric power control apparatus 40 of the restriction condition. The electric power control apparatus 140 may set the restriction condition in the business establishment 30 so as to minimize the overall power cost in the business establishment 31 and the business establishment 30. The user is a person or a system that inputs information related to management of electric power in the business establishment 30 to the electric power control apparatus 40. The restriction condition is a condition which becomes a restriction for the preparation of the power plan. The restriction condition may include a restriction which is required to meet the power demand. The restriction condition includes, for example, a predicted power generation amount, a predicted power consumption amount, and information related to an electricity charge. The power generation amount is, for example, a power generation amount in the power generation apparatus 80. The power consumption amount is a power consumption amount in the business establishment 30. The electricity charge includes a power purchase price, a power selling price, and a consideration value obtained by reducing the power consumption according to a demand response. The power purchase price is, for example, a condition related to an amount of money imposed as a consideration value for power reception by the business establishment 30 from the power network 90. The power selling price is, for example, a condition related to an amount of money obtained as a consideration value for power supply by the business establishment 30 to the power network 90.

**In** S4012, the electric power control apparatus 40 prepares the power plan on the day in the business establishment 30 based on the restriction information. The power plan includes a power consumption amount for each timeframe in one day. The power plan determines how much electric power is consumed for each timeframe in the business establishment 30. The power consumption amount for each timeframe on the day may be predicted from environmental information such as weather information on the day and past performance data. The power plan may include peak shave information to perform peak shave. The peak shave information may include information indicating how much power consumption is to be suppressed during what timeframe in the business establishment 30. The peak shave information may include information indicating how much electric power is to be received from the outside during what timeframe in the business establishment 30.

The electric power control apparatus 40 may prepare an optimal power plan in the business establishment 30. For example, the electric power control apparatus 40 may prepare a power plan so as to minimize the amount of electric power received from the power network 90 in the business establishment 30. The electric power control apparatus 40 may prepare a power plan so as to minimize the amount of money imposed as a consideration value for power reception in the business establishment 30 from the power network 90. Under a condition of compliance with contracted electric power in at least the business establishment 30, the electric power control apparatus 40 may prepare the power plan so as to maximize an amount of money obtained as a consideration value for reducing the power consumption in the business establishment 30 according to the demand response in the business establishment 30 or performing power supply to the power network 90. **In** this manner, the electric power control apparatus 40 prepares the optimal power plan as the power plan on the day in the business establishment 30 based on the restriction condition. According to this power plan, the amount of electric power which needs to be received from the outside in each timeframe on the day is set. The amount of electric power which needs to be received from the outside may be supplied from the battery 12 included in the vehicle 10 parking in the business establishment 30. The electric power control apparatus 40 transmits the prepared power plan to the integrated management apparatus 50.

As the control related to the vehicle management apparatus 60, in S4210, the user inputs reservation information related to the dispatch of the vehicle 10. The user is a person who uses the vehicle 10, an administrator of a system, the system, or the like. The reservation information includes a condition which may become a restriction on preparation of the operation plan. The reservation information includes, for example, a starting point, a destination, and a returning point, a departure time at the starting point, an arrival time and a departure time at the destination, an arrival time at the returning point, and the like. The starting point and the destination determine from which location to which location the vehicle 10 needs to travel. For the departure time at the starting point and the arrival time at the returning point, a time adjustment allowance amount which indicates an amount of time that the departure time and the arrival time may be allowed to change may be set. The reservation information input in S4210 is transmitted to the vehicle management apparatus 60 and also transmitted to the integrated management apparatus 50 through the vehicle management apparatus 60.

**In** S4212, the planning unit 220 of the vehicle management apparatus 60 prepares the operation plan on the day in the business establishment 30 by aggregating the restriction conditions notified from the user. For example, the planning unit 220 decides the vehicle 10 to be used to transport people, a travel route of the vehicle 10, and a travel speed of the vehicle 10 such that a transport demand set by the reservation information is met. The vehicle management apparatus 60 transmits the prepared operation plan to the integrated management apparatus 50.

**In** S4110, the integrated management apparatus 50 accepts the power plan transmitted from the electric power control apparatus 40 and the reservation information and the operation plan transmitted from the vehicle management apparatus 60.

**In** S4112, the processing unit 320 of the integrated management apparatus 50 determines whether or not the power plan in the business establishment 30 is to be met when the vehicle 10 is operated according to the operation plan. For example, the operation plan determines a period in which it is predicted that the vehicle 10 exists in the business establishment 30. During a period in which the business establishment 30 requires the power supply from the outside, when it can be predicted that the electric power is received from the battery 12 included in the vehicle 10 existing in the business establishment 30 during the period, the processing unit 320 determines that the power plan is met.

In a case where it is determined that the power plan cannot be met when dispatch of a vehicle is performed according to the operation plan, the processing unit 320 determines how the operation plan can be modified to meet the power plan. For example, the processing unit 320 decides adjustment amounts of a departure time and an arrival time of the vehicle 10 in the operation plan.

The integrated management apparatus 50 transmits modification information including the decided adjustment amounts of the departure time and the arrival time to the vehicle management apparatus 60. When the modification information is received from the integrated management apparatus 50, the planning unit 220 of the vehicle management apparatus 60 modifies the operation plan prepared in S4212 based on the modification information (S4213). For example, the planning unit 220 modifies the operation plan so as to meet the reservation information based on the adjustment amounts of the departure time and the arrival time received from the integrated management apparatus 50. The vehicle management apparatus 60 transmits a modification result of the operation plan to the integrated management apparatus 50. The integrated management apparatus 50 and the vehicle management apparatus 60 repeat the processes in S4112 and S4213 to decide the performable operation plan. In S4213, when the operation route of the vehicle 10 is decided and the vehicle 10 is caused to travel such that the departure time and the arrival time designated by the reservation information can be complied, the planning unit 220 decides the performable operation plan by determining whether or not the vehicle 10 can return to the business establishment 30 without running out of the electric power based on an SOC and an electric power consumption rate of the vehicle 10. In addition, in S4112, the processing unit 320 may determine that the operation plan is performable under a condition that it is determined that an overall profit is to be obtained by taking into account an electric power cost reduction amount of the business establishment 30 which is obtained when the electric power transfer is performed between the battery 12 and the business establishment 30 according to the decided power plan and an operating cost of the vehicle 10 which is required when the operation of the vehicle 10 is performed according to the operation plan and an operating rate of the vehicle 10.

When the operation plan is decided, an arbitration result including the operation plan is transmitted to the electric power control apparatus 40. When receiving the arbitration result from the integrated management apparatus 50, the electric power control apparatus 40 reflects the arbitration result in the power plan based on the arbitration result (S4014), and notifies the user of the power plan confirmed by reflecting the arbitration result (S4015). In S4016, the user and the electric power control apparatus 140 execute the control according to the notified power plan.

The vehicle management apparatus 60 confirms the operation plan finally decided in S4213 (S4214) and notifies the user of the confirmed operation plan through the communication unit 290. In S4216, the user performs the operation control of the vehicle 10 according to the notified operation plan.

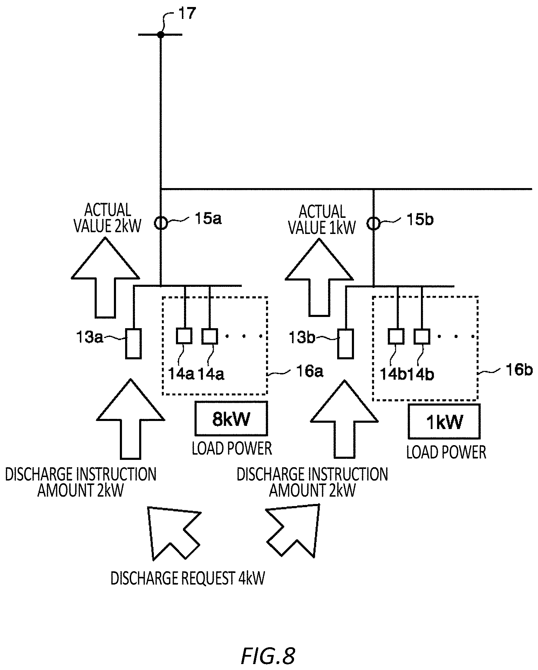

Fig. 8 is a diagram for describing control by the control apparatus 100. When the power plan is executed in S4016 in Fig. 7, the electric power control apparatus 40 transmits, to the control apparatus 100, the discharge request including the electric power that is to be released from the battery 12 to the circuit 16 included in the business establishment 30 and the period in which the electric power is to be released from the battery 12. The control apparatus 100 releases the electric power from the battery 12 by controlling each of the charge and discharge devices 13 based on the discharge request.

Fig. 8 illustrates control in a case where the reception unit 114 receives the discharge request indicating that electric power at 4 kW is to be released. Herein, for a purpose of providing a description in a way that is easy to understand, a case will be considered where the charge and discharge devices 13 set as control targets are two components including the charge and discharge device 13a and the charge and discharge device 13b.

When the discharge request from the electric power control apparatus 40 is received, the decision unit 104 decides 2 kW as the discharge instruction amount at which the charge and discharge device 13a and the charge and discharge device 13b are caused to release the electric power to the circuit 16a and the circuit 16b, respectively. The decision unit 104 decides, as an initial value of the discharge instruction amount, a value obtained by dividing the electric power indicated by the discharge request by a number (2 in the example of Fig. 8) of charge and discharge devices 13 that are to perform the control for the discharge from the battery 12.

Herein, it is assumed that the load power of the circuit 16a is 8 kW, and the load power of the circuit 16b is 1 kW. Since the load power of the circuit 16a is 2 kW or more that is the discharge instruction amount for the charge and discharge device 13a, the electric power released to the circuit 16a through the charge and discharge device 13a is 2 kW. The charge and discharge device 13a outputs 2 kW to the control apparatus 100 as the actual value of the electric power released to the circuit 16a. The charge and discharge device 13a may output, to the control apparatus 100, an average value of the electric power released to the circuit 16a for a predetermined period (for example, 1 minute) as the actual value.

On the other hand, since the load power of the circuit 16b is less than 2 kW that is the discharge instruction amount for the charge and discharge device 13b, the electric power released to the circuit 16b through the charge and discharge device 13b is 1 kW that is the load power. The charge and discharge device 13b outputs 1 kW to the control apparatus 100 as the actual value of the electric power released to the circuit 16b. The charge and discharge device 13b may output, to the control apparatus 100, an average value of the electric power released to the circuit 16b for a predetermined period (for example, 1 minute) as the actual value.

The determination unit 106 determines, based on the discharge instruction amount for each of the charge and discharge device 13a and the charge and discharge device 13b and the actual value output from each of the charge and discharge device 13a and the charge and discharge device 13b, whether or not the discharge instruction amount for any of at least the charge and discharge device 13a or the charge and discharge device 13b is to be changed. **In** the example of Fig. 8, since a total value of the discharge instruction amounts and a total value of the actual values are not consistent with each other, the charge and discharge device 13 determines that the discharge instruction amount for each of the charge and discharge device 13a and the charge and discharge device 13b is to be changed.

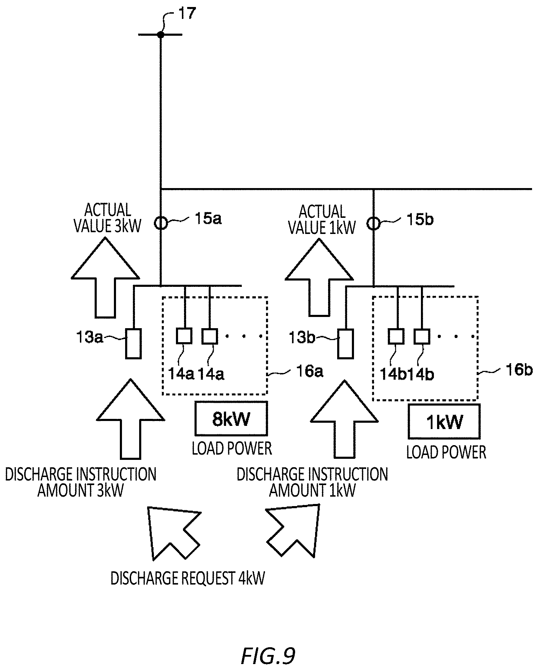

Fig. 9 illustrates a state in which the control apparatus 100 has changed the discharge instruction amount. The decision unit 104 changes the discharge instruction amount based on a determination of the determination unit 106. As illustrated in Fig. 8, the actual value (1 kW) of the charge and discharge device 13b is less than the discharge instruction amount (2 kW) for the charge and discharge device 13b, and the actual value (2 kW) of the charge and discharge device 13a is consistent with the discharge instruction amount (2 kW) for the charge and discharge device 13a. Therefore, the decision unit 104 reduces the discharge instruction amount for the charge and discharge device 13b by predetermined electric power and increases the discharge instruction amount for the charge and discharge device 13a by the predetermined electric power. The "predetermined electric power" may be a value obtained by subtracting the electric power released to the circuit 16b from the discharge instruction amount for the charge and discharge device 13b. Specifically, the decision unit 104 reduces the discharge instruction amount for the charge and discharge device 13b by 1 kW to set be at 1 kW and increases the discharge instruction amount for the charge and discharge device 13a by 1 kW to set be at 3 kW.

The load power of the circuit 16a is 8 kW, which is 3 kW or more that is the discharge instruction amount for the charge and discharge device 13a. Therefore, as illustrated in Fig. 9, the electric power released to the circuit 16a through the charge and discharge device 13a is set at 3 kW. Accordingly, the charge and discharge device 13a outputs 3 kW to the control apparatus 100 as the actual value of the electric power released to the circuit 16a.

The load power of the circuit 16b is 1 kW, which is 1 kW or less that is the discharge instruction amount for the charge and discharge device 13b. Therefore, as illustrated in Fig. 9, the electric power released to the circuit 16b through the charge and discharge device 13b is set at 1 kW. Accordingly, the charge and discharge device 13b outputs 1 kW to the control apparatus 100 as the actual value of the electric power released to the circuit 16.

The determination unit 106 determines, based on the discharge instruction amount for each of the charge and discharge device 13a and the charge and discharge device 13b and the actual value output from each of the charge and discharge device 13a and the charge and discharge device 13b, whether or not the discharge instruction amount for any of at least the charge and discharge device 13a or the charge and discharge device 13b is to be changed. In the example of Fig. 9, since the discharge request at 4 kW and the total of the actual values are consistent with each other, the charge and discharge device 13 determines that the discharge instruction amount for each of the charge and discharge device 13a and the charge and discharge device 13b is not to be changed.

In accordance with the control of the decision unit 104 and the determination unit 106, the discharge instruction amount can be changed based on the discharge instruction amount and the actual value. Accordingly, when the electric power that may be released to the circuit 16 with the small electric power load is small, it is possible to instruct the charge and discharge device 13 which releases the electric power to another circuit 16 to discharge greater electric power. Therefore, as the entire business establishment 30, the electric power according to the discharge request from the electric power control apparatus 40 can be released to the circuit 16. Accordingly, for example, a configuration can be adopted where the amount of electric power received by the business establishment 30 from the electric power system does not largely deviate from a target amount of electric power of the peak shave in the business establishment 30.

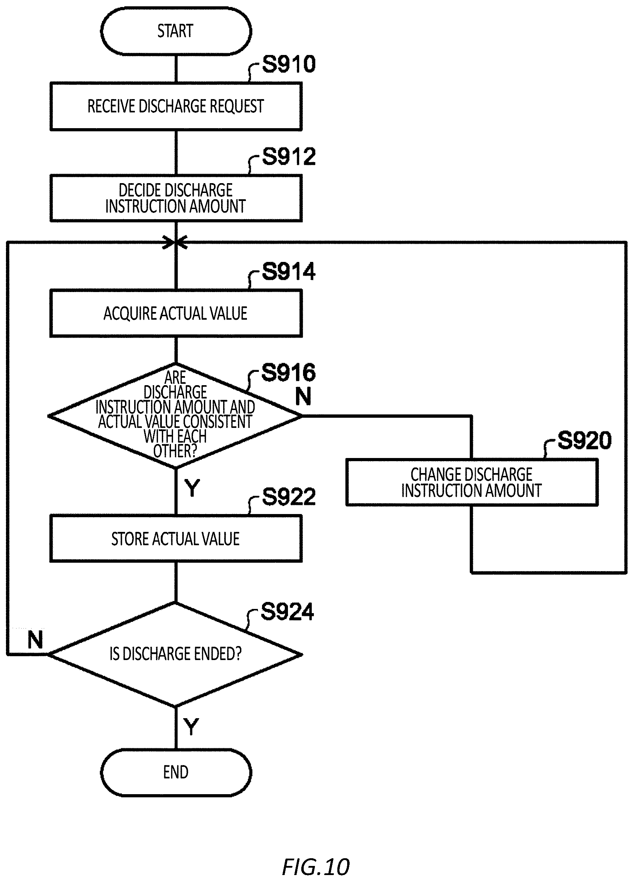

Fig. 10 is a flowchart related to the processing performed in the control apparatus 100. In S910, the reception unit 114 receives a discharge request from the electric power control apparatus 40. In S912, the decision unit 104 decides a discharge instruction amount. Specifically, the decision unit 104 decides the discharge instruction amount based on the electric power included in the discharge request and a number of charge and discharge devices 13 set as objects on which the control to release the electric power from the battery 12 is performed.

In S914, the actual value of the electric power released from each of the charge and discharge devices 13 to the circuit 16 is acquired. In S916, the determination unit 106 determines whether or not the discharge instruction amount and the actual value are consistent with each other. The determination unit 106 may determine whether or not the discharge instruction amount and the actual value are consistent with each other with regard to each of the charge and discharge devices 13. The determination unit 106 may determine whether or not a total value of the discharge instruction amount for each of the charge and discharge devices 13 and a total value of the actual value output from the charge and discharge device 13 are consistent with each other.

In S916, when it is determined that the discharge instruction amount and the actual value are not consistent with each other, in S920, the decision unit 104 changes the discharge instruction amount for the charge and discharge device 13, and the processing proceeds to S914. For example, in S920, as described in connection to Fig. 9 or the like, the decision unit 104 reduces the discharge instruction amount of the charge and discharge device 13 having the actual value less than the discharge instruction amount and increases the discharge instruction amount of the charge and discharge device 13 in which the actual value and the discharge instruction amount are consistent with each other.

In S916, when the determination unit 106 determines that the discharge instruction amount and the actual value are consistent with each other, in S922, the control apparatus 100 stores the actual value acquired in S914 in the storage unit 118. At this time, the control apparatus 100 stores, in the storage unit 118, the actual value acquired in S914 in association with identification information of the circuit 16. The control apparatus 100 may store the actual value acquired in S914 in the storage unit 118 in association with the identification information of the charge and discharge device 13. In S922, the control apparatus 100 may store the discharge instruction amount instead of the actual value in the storage unit 118.

In S924, the control apparatus 100 determines whether or not the discharge by the charge and discharge device 13 is to be ended. For example, the control apparatus 100 determines that the discharge by the charge and discharge device 13 is to be ended when an instruction to end the release of the electric power to the circuit 16 is acquired from the electric power control apparatus 40.

In S924, when it is determined that the discharge by the charge and discharge device 13 is not to be ended, the processing proceeds to S914. When it is determined that the discharge by the charge and discharge device 13 is to be ended in S924, the processing in this flowchart ends.

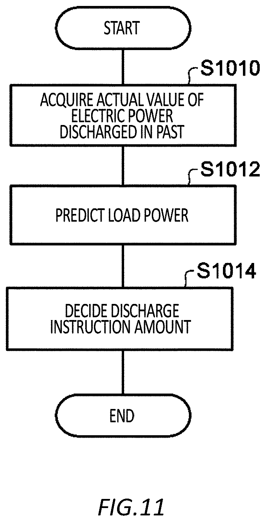

Fig. 11 illustrates a flowchart related to processing for the decision unit 104 to decide the discharge instruction amount. The processing in this flowchart can be adopted to the process of S912 in Fig. 10.

In S1010, the prediction unit 108 acquires the actual value of the electric power discharged to the circuit 16 in the past. Specifically, the prediction unit 108 reads out the actual value stored in the storage unit 118 from the storage unit 118 in S922 in Fig. 10.

In S1012, the prediction unit 108 predicts load power of each of the circuits 16 based on the actual value of the electric power discharged to each of the circuits 16 in the past. For example, the prediction unit 108 predicts the load power in the future or in the present in each of the circuits 16 based on an average value of the actual values of the electric power discharged to each of the circuits 16 in the past.

In S1014, the decision unit 104 decides the discharge instruction amount for each of the charge and discharge devices 13 based on the load power predicted in S1012. In this manner, the decision unit 104 can decide the discharge instruction amount based on the actual value of the electric power discharged to the circuit 16 in the past. Therefore, when the discharge request is received from the electric power control apparatus 40, the decision unit 104 can increase the chance that an appropriate value based on the actual value in the past can be decided as the initial value of the discharge instruction amount for the charge and discharge device 13.

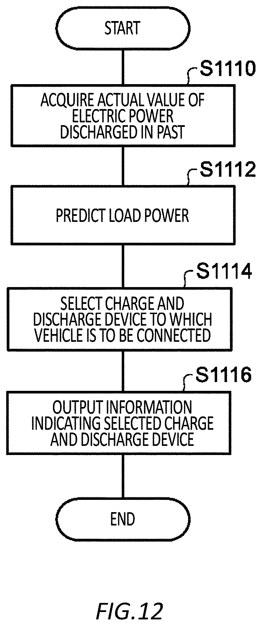

Fig. 12 illustrates a flowchart related to processing to select the charge and discharge device 13 to which the vehicle 10 is to be connected. The processing in this flowchart may be performed by the control apparatus 100, the electric power control apparatus 40, and the vehicle management apparatus 60 in cooperation with one another.

In S1110, the prediction unit 108 acquires the actual value of the electric power discharged to the circuit 16 in the past. Specifically, the prediction unit 108 reads out the actual value stored in the storage unit 118 from the storage unit 118 in S922 in Fig. 10.

In S1112, the prediction unit 108 predicts load power in each of the circuits 16 based on the actual value of the electric power discharged to each of the circuits 16 in the past. For example, the prediction unit 108 predicts load power in the future in each of the circuits 16 based on an average value of the actual values of the electric power discharged to each of the circuits 16 in the past.

In S1114, the selection unit 110 selects the charge and discharge device 13 to which the vehicle is to be connected based on the load power predicted in S1112. For example, the selection unit 110 preferentially selects the charge and discharge device 13 having the load power predicted in S1112 that is greater than others as the charge and discharge device to which the vehicle 10 is to be connected. Accordingly, since the connection of the vehicle 10 to the charge and discharge device 13 in which the large load power is predicted can be facilitated, it is possible to increase the chance that the electric power according to the discharge request from the electric power control apparatus 40 can be released to the circuit 16.

In S1116, the control apparatus 100 outputs information indicating the charge and discharge device 13 selected in S1114. For example, the transmission unit 116 may transmit the information indicating the charge and discharge device 13 selected in S1114 to the electric power control apparatus 40. The electric power control apparatus 40 may include the information indicating the charge and discharge device 13 which is received from the control apparatus 100 in part of the power plan. The electric power control apparatus 40 may transmit, to the vehicle management apparatus 60 through the integrated management apparatus 50 or directly, the information indicating the charge and discharge device 13 which is received from the control apparatus 100. The vehicle management apparatus 60 may include the information indicating the charge and discharge device 13 which is received from the electric power control apparatus 40 in part of the operation plan. The vehicle management apparatus 60 may notify the user of the information indicating the charge and discharge device 13 which is received from the electric power control apparatus 40.

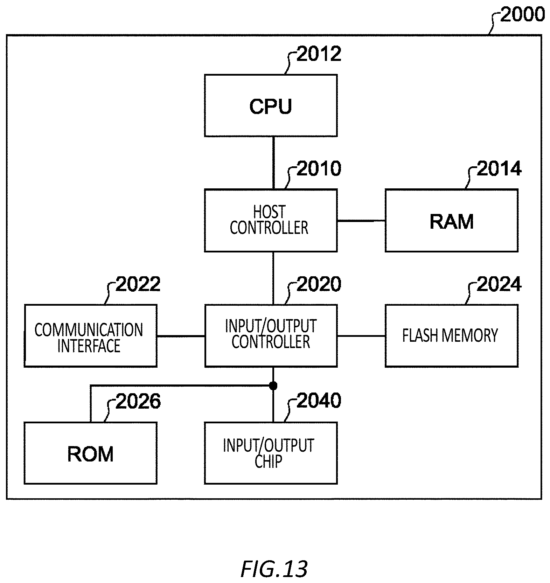

Fig. 13 illustrates an example of a computer 2000 in which a plurality of embodiments of the present invention may be entirely or partially embodied. A program installed in the computer 2000 can cause the computer 2000 to function as the system 5 or each unit of the system 5, or an apparatus such as the control apparatus 100, the electric power control apparatus 40, and the vehicle management apparatus 60 or each unit of the apparatus according to the embodiment and to execute an operation associated with the system or each unit of the system, or the apparatus or each unit of the apparatus, and/or execute a process or a step of the process according to the embodiment. Such a program may be executed by a CPU 2012 in order to cause the computer 2000 to execute a specific operation associated with some or all of the processing procedures and the blocks in the block diagrams described herein.

The computer 2000 according to the present embodiment includes the CPU 2012 and a RAM 2014, which are mutually connected by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to programs stored in the ROM 2026 and the RAM 2014, and thereby controls each unit.

The communication interface 2022 communicates with another electronic device via a network. The flash memory 2024 stores a program and data used by the CPU 2012 in the computer 2000. The ROM 2026 stores a boot program or the like executed by the computer 2000 upon activation, and/or a program which depends on hardware of the computer 2000. The input/output chip 2040 may also connect various input/output units such as a keyboard, a mouse, and a monitor, to the input/output controller 2020 via input/output ports such as a serial port, a parallel port, a keyboard port, a mouse port, a monitor port, a USB port, a HDMI (registered trademark) port.

A program is provided via a network or a computer readable storage medium such as a CD-ROM, a DVD-ROM, or a memory card. The RAM 2014, the ROM 2026, or the flash memory 2024 is an example of the computer readable storage medium. The program is installed in the flash memory 2024, the RAM 2014, or the ROM 2026, and executed by the CPU 2012. Information processing written in these programs is read by the computer 2000, and provides cooperation between the programs and the various types of hardware resources described above. An apparatus or a method may be actualized by executing operations or processing of information according to a use of the computer 2000.

For example, when a communication is executed between the computer 2000 and an external device, the CPU 2012 may execute a communication program loaded on the RAM 2014, and instruct the communication interface 2022 to execute communication processing based on processing written in the communication program. Under the control of the CPU 2012, the communication interface 2022 reads transmission data stored in a transmission buffer processing region provided in a recording medium such as the RAM 2014 or the flash memory 2024, transmits the read transmission data to the network, and writes reception data received from the network into a reception buffer processing region or the like provided on the recording medium.

In addition, the CPU 2012 may cause all or a necessary portion of a file or a database stored in a recording medium such as the flash memory 2024 and the like to be read into the RAM 2014, and execute various kinds of processing on the data on the RAM 2014. Next, the CPU 2012 writes back the processed data into the recording medium.

Various types of information such as various types of programs, data, a table, and a database may be stored in the recording medium and may be subjected to information processing. The CPU 2012 may execute, on the data read from the RAM 2014, various kinds of processing including various kinds of operations, information processing, conditional judgement, conditional branching, unconditional branching, information retrieval/replacement, or the like described herein and specified by instruction sequences of the programs, and write back a result into the RAM 2014. In addition, the CPU 2012 may retrieve information in a file, a database, or the like in the recording medium. For example, when multiple entries each having an attribute value of a first attribute associated with an attribute value of a second attribute, is stored in the recording medium, the CPU 2012 may retrieve an entry having a designated attribute value of the first attribute that matches a condition from these multiple entries, and read the attribute value of the second attribute stored in this entry, thereby obtaining the attribute value of the second attribute associated with the first attribute that satisfies a predetermined condition.

The program or software module described above may be stored in a computer readable storage medium on the computer 2000 or near the computer 2000. A recording medium such as a hard disk or a RAM provided in a server system connected to a dedicated communication network or the Internet can be used as the computer readable storage medium. A program stored in the computer readable storage medium may be provided to the computer 2000 via a network.

Programs which are installed in the computer 2000 and cause the computer 2000 to function as the control apparatus 100 may cause, when executed by the computer, the computer 2000 to function as each unit of the control apparatus 100 by working with the CPU 2012 or the like. When information processing described in these programs are read by the computer 2000, the computer 2000 functions as each unit of the integrated management apparatus 50 that is specific means in which software and various hardware resources described above cooperate with each other. Then, these specific means realize calculation or processing of information corresponding to an intended use of the computer 2000 in the present embodiment, so that the control apparatus 100 is constructed as a specific control apparatus corresponding to the intended use.

Programs which are installed in the computer 2000 and cause the computer 2000 to function as the integrated management apparatus 50 may cause, when executed by the computer, the computer 2000 to function as each unit of the integrated management apparatus 50 by working with the CPU 2012 or the like. When information processing described in these programs are read by the computer 2000, the computer 2000 functions as each unit of the integrated management apparatus 50 that is specific means in which software and various hardware resources described above cooperate with each other. Then, when a calculation or processing of information according to the intended use of the computer 2000 in the present embodiment is realized by the specific means, the unique integrated management apparatus 50 according to the intended use is constructed.

The program installed in the computer 2000 to cause the computer 2000 to function as the vehicle management apparatus 60 may work on the CPU 2012 or the like to cause the computer 2000 to function as each unit of the vehicle management apparatus 60. The information processing described in these programs is read by the computer 2000 to function as each unit of the vehicle management apparatus 60 which is a specific means in which software and the above-described various hardware resources cooperate. Then, when calculation or processing of information according to the intended use of the computer 2000 in the present embodiment is realized by these specific means, the unique vehicle management apparatus 60 according to the intended use is constructed.

Various embodiments have been described with reference to the block diagrams and the like. In the block diagrams, each block may represent (1) a stage of a process in which an operation is executed, or (2) each unit of the apparatus having a role in executing the operation. A specific step and each unit may be implemented by a dedicated circuit, a programmable circuit supplied with computer readable instructions stored on a computer readable storage medium, and/or a processor supplied with computer readable instructions stored on a computer readable storage medium. The dedicated circuit may include a digital and/or analog hardware circuit, or may include an integrated circuit (IC) and/or a discrete circuit. The programmable circuit may include a reconfigurable hardware circuit including logical AND, logical OR, logical XOR, logical NAND, logical NOR, and another logical operation, and a memory element or the like such as a flip-flop, a register, a field programmable gate array (FPGA), a programmable logic array (PLA), or the like.

The computer readable storage medium may include any tangible device capable of storing instructions to be executed by an appropriate device. Thereby, the computer readable storage medium having instructions stored therein forms at least a part of a product including instructions which can be executed to provide means for executing processing procedures or operations specified in the block diagrams. An example of the computer readable storage medium may include an electronic storage medium, a magnetic storage medium, an optical storage medium, an electromagnetic storage medium, a semiconductor storage medium, etc. A more specific example of the computer readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disk (DVD), a Blu-ray (registered trademark) disk, a memory stick, an integrated circuit card, or the like.

The computer readable instructions may include an assembler instruction, an instruction-set-architecture (ISA) instruction, a machine instruction, a machine-dependent instruction, a microcode, a firmware instruction, state-setting data, or either of source code or object code written in any combination of one or more programming languages including an object-oriented programming language such as Smalltalk (registered trademark), JAVA (registered trademark), and C++, or the like, and a conventional procedural programming language such as a "C" programming language or a similar programming language.

Computer readable instructions may be provided to a processor of a programmable data processing apparatus such as a computer or a programmable circuit, locally or via a local area network (LAN), wide area network (WAN) such as the Internet or the like, and a computer readable instruction may be executed to provide means for executing operations specified in the described processing procedures or block diagrams.

Here, the computer may be a computer such as a personal computer (PC), a tablet computer, smartphone, a work station, a server computer, or a general purpose computer, or may be a computer system in which a plurality of computers are connected. Such computer system to which the plurality of computers are connected is also referred to as a distributed computing system, and is a computer in a broad sense. In a distributed computing system, a plurality of computers collectively execute a program by each of the plurality of computers executing a portion of the program, and passing data during the execution of the program among the computers as needed.

Examples of the processor include a computer processor, a central processing unit (CPU), a processing unit, a microprocessor, a digital signal processor, a controller, a microcontroller, and the like. The computer may include one processor or a plurality of processors. In a multi-processor system including a plurality of processors, the plurality of processors collectively execute a program by each of the processors executing a portion of the program, and passing data during the execution of the program among the processors as needed. For example, in execution of multiple tasks, each of the plurality of processors may execute a portion of each task pieces by pieces by performing task-switching for each time slice. In this case, which portion of one program each processor is responsible for executing dynamically changes. In addition, which portion of the program each of the plurality of processors is to execute may be statically determined by multi-processor aware programming.

While the present invention has been described by way of the embodiments, the technical scope of the present invention is not limited to the above-described embodiments. It is apparent to persons skilled in the art that various alterations or improvements can be made to the above described embodiments. It is also apparent from description of the claims that the embodiments to which such changes or improvements are made may be included in the technical scope of the present invention.

The operations, procedures, steps, and stages etc. of each process performed by an apparatus, system, program, and method shown in the claims, specification, or diagrams can be executed in any order as long as the order is not indicated by "before", "prior to", or the like and as long as the output from a previous process is not used in a later process. Even if the operation flow is described using phrases such as "first" or "next" for the sake of convenience in the claims, specification, or drawings, it does not necessarily mean that the process must be performed in this order.

### EXPLANATION OF REFERENCES

5: system;
10: vehicle;
12: battery;
13: charge and discharge device;
14: electric power load apparatus;
15: current transformer;
16: circuit;
17: reception power point;
18: solar photovoltaic apparatus;
19: electric power system;
30, 31: business establishment;
40, 41: electric power control apparatus;
50, 51: integrated management apparatus;
60, 61: vehicle management apparatus;
70: power consumer;
80: power generation apparatus;
90: power network;
100: control apparatus;
102: calculation unit;
104: decision unit;
106: determination unit;
108: prediction unit;
110: selection unit;
112: communication unit;
114: reception unit;
116: transmission unit;
118: storage unit;
140: electric power control apparatus;
180: server;
190: communication network;
200: calculation unit;
210: reservation acceptance unit;
220: planning unit;
280: storage unit;
290: communication unit;
300: calculation unit;
310: reservation acceptance unit;
312: energy demand acceptance unit;
320: processing unit;
380: storage unit;
390: communication unit;
2000: computer;
2010: host controller;
2012: CPU;
2014: RAM;
2020: input/output controller;
2022: communication interface;
2024: flash memory;
2026: ROM; and
2040: input/output chip.
A control apparatus includes a decision unit which decides a discharge instruction amount indicating electric power that each of discharge apparatuses which release electric power to each of a plurality of circuits is caused to discharge, and a determination unit which determines whether or not the discharge instruction amount is to be changed based on the discharge instruction amount and an actual value of the electric power released from the discharge apparatus to each of the plurality of circuits. A control method includes deciding a discharge instruction amount indicating electric power that each of discharge apparatuses which release electric power to each of a plurality of circuits is caused to discharge, and determining whether or not the discharge instruction amount is to be changed based on the discharge instruction amount and an actual value of the electric power released from the discharge apparatus to each of the plurality of circuits.

## Claims

1. A control apparatus comprising:
a decision unit which decides a discharge instruction amount indicating electric power that each of discharge apparatuses which release electric power to each of a plurality of circuits is caused to discharge; and
a determination unit which determines whether or not the discharge instruction amount is to be changed based on the discharge instruction amount and an actual value of the electric power released from the discharge apparatus to each of the plurality of circuits.

2. The control apparatus according to claim 1, further comprising:
a reception unit which receives a discharge request indicating discharging power that is to be released to the plurality of circuits, wherein
the decision unit decides the discharge instruction amount based on the discharge request.

3. The control apparatus according to claim 1 or 2, further comprising:
a storage unit which stores information indicating at least one of the discharge instruction amount to the discharge apparatus in past or the actual value of the electric power released to each of the plurality of circuits from the discharge apparatus in past, wherein
the decision unit decides the discharge instruction amount based on the information stored in the storage unit.

4. The control apparatus according to claim 3, wherein
each of the plurality of circuits includes an electric power load apparatus which generates an electric power load by consuming electric power or accumulating electric power,
the control apparatus further comprising:
a prediction unit which generates, based on the information stored in the storage unit, (i) a predicted value in future of load power of each of the electric power load apparatuses respectively included in the plurality of circuits or (ii) a predicted value in future of a total amount of the load power of each of the electric power load apparatuses respectively included in the plurality of circuits, wherein
the decision unit decides the discharge instruction amount based on the predicted value generated by the prediction unit.

5. The control apparatus according to claim 1 or 2, further comprising:
a storage unit which stores information indicating at least one of the discharge instruction amount to the discharge apparatus in past or the actual value of the electric power released to each of the plurality of circuits from the discharge apparatus in past;
a prediction unit which generates a predicted value in future of electric power which may be released to the plurality of circuits based on the information stored in the storage unit; and
a selection unit which selects, based on the predicted value generated by the prediction unit, one or more discharge apparatuses to which a movable body including an energy accumulation apparatus is to be connected among the discharge apparatuses.

6. An electric power system comprising:
the control apparatus according to any one of claims 1 to 5;
the plurality of circuits; and
the discharge apparatus, wherein
each of the plurality of circuits includes an electric power load apparatus which generates an electric power load by consuming electric power or accumulating electric power, and
the discharge apparatus which releases electric power to each circuit of the plurality of circuits releases electric power to the electric power load apparatus included in each circuit.

7. The electric power system according to claim 6, wherein
each of the plurality of circuits includes an electric power load apparatus which generates an electric power load by consuming electric power or accumulating electric power, and
the electric power load apparatus included in each of the plurality of circuits and the discharge apparatus which releases electric power to each circuit are configured as a same electric circuit.

8. The electric power system according to claim 6 or 7, wherein
the discharge apparatus is a discharge device or a charge and discharge device which is connectable to a movable body including an energy accumulation apparatus.

9. A control method comprising:
deciding a discharge instruction amount indicating electric power that each of discharge apparatuses which release electric power to each of a plurality of circuits is caused to discharge; and
determining whether or not the discharge instruction amount is to be changed based on the discharge instruction amount and an actual value of the electric power released from the discharge apparatus to each of the plurality of circuits.

10. A program which, when executed by a computer, causes the computer to function as the control apparatus according to any one of claims 1 to 5.
